# EUROPÄISCHE PATENTSCHRIFT

(11) **EP 1 917 455 B1**
(45) Veröffentlichungstag und Bekanntmachung des Hinweises auf die Patenterteilung: **09.12.2009**
(21) Anmeldenummer: 06776952.1
(22) Anmeldetag: 18.08.2006
(51) Int. Cl.: F16F 9/512

(54) **SCHWINGUNGSDÄMPFER**
VIBRATION DAMPER
AMORTISSEUR DE VIBRATIONS

(30) Priorität: 24.08.2005 DE 102005040283
(43) Veröffentlichungstag der Anmeldung: 07.05.2008
(73) Patentinhaber: ZF Friedrichshafen AG, 88046 Friedrichshafen (DE)
(72) Erfinder: ZEISSNER, Bernd, 97332 Volkach/Gaibach (DE); FOERSTER, Andreas, 97422 Schweinfurt (DE); GUNDERMANN, Frank, 97453 Marktsteinach (DE); HEYN, Steffen, 97464 Niederwerrn (DE); KRAWCZYK, Anton, 51570 Windeck (DE); BOECKER, Uwe, 53797 Lohmar (DE); THEIN, Thomas, 97526 Sennfeld (DE); BREUN, Wolfgang, 97464 Niederwerrn (DE); BIES, Herbert, 53501 Grafschaft/Vettelhoven (DE); BEYER, Holger, 96176 Pfarrweisach (DE); GAMPL, Ludwig, 97523 Schwanfeld (DE); GILSDORF, Heinz-Joachim, 97499 Donnersdorf (DE); SAUER, Klaus, 97520 Röthlein (DE)
(86) Internationale Anmeldenummer: PCT/EP2006/008157
(87) Internationale Veröffentlichungsnummer: WO 2007/022920

(56) Entgegenhaltungen:
- DE-B3-102004 015 448
- DE-C1- 3 926 704
- DE-C1- 10 041 199
- JP-A- 10 339 345
- US-A1- 2003 051 957

## Beschreibung

### Technisches Gebiet

Die Erfindung betrifft einen Schwingungsdämpfer gemäß dem Oberbegriff von Patentanspruch 1.

### Stand der Technik

Aus der DE 100 41 199 C1 ist der gattungsbildende Schwingungsdämpfer bekannt. Funktional erfüllt dieses Konstruktionsprinzip die Aufgabe hochfrequente, kleinamplitudige Anregungen auszufiltern und damit einen Komfortvorteil im Vergleich zu einem konventionellen Schwingungsdämpfer zu bieten. Ein erster Kolben ist fest mit der Kolbenstange verbunden. Der zweite Kolben gleitet auf der Kolbenstange und wird von zwei Federn gestützt, von denen eine Stützfeder am ersten Kolben und eine zweite Stützfeder an einem Federteller anliegt, der wiederum von einem Sicherungsring gehalten wird. Die Ventilscheiben werden von den Stützfedern auf den zweiten Kolben vorgespannt, die auch gegen die Axialbewegung des zweiten Kolbens wirken. Daraus ergibt sich einerseits eine komplizierte Montage und andererseits eine Abhängigkeit der Ventilscheibenvorspannung zur Axialkraftunterstützung des zweiten Kolbens.

Aus der JP 10-339 345 A ist ein Schwingungsdämpfer bekannt, in dessen Zylinder eine Kolbenstange axial beweglich geführt ist. An der Kolbenstange ist ein erster Kolben ortsfest und ein zweiter Kolben in Grenzen axial beweglich angeordnet. Der zweite Kolben verfügt über elastische Ventilscheiben und kann gegen die Federkraft von Federn eine axiale Verschiebebewegung ausführen. Der Zylinder weist einen kolbenstangenseitigen und einen kolbenstangenfernen sowie einen Arbeitsraum zwischen den beiden Kolben auf, wobei ventilbestückte Durchlassöffnungen eine Verbindung zwischen den Arbeitsräumen steuern. Auch diese Konstruktion enthält keine vormontierbare Baueinheit für den zweiten Kolben mit seinen Federn.

### Darstellung der Erfindung

Aufgabe der vorliegenden Erfindung ist es, den gattungsbildenden Schwingungsdämpfer derart weiterzuentwickeln, dass der zweite Kolben einerseits einfach montierbar ist und andererseits die Ventilscheibenvorspannung unabhängig von den Axialkräften der Stützfedern ausgeführt ist.

Erfindungsgemäß wird die Aufgabe dadurch gelöst, dass der zweite Kolben von einer Fixierhülse gehalten wird, die den mindestens einen Federteller trägt, wobei die Baueinheit aus Fixierhülse und dem mindestens einen Federteller eine axial wirksame Teilungsfuge für eine Rastverbindung innerhalb der Baueinheit aufweist, wobei die gesamte Baueinheit gegen die mindestens eine Stützfeder axial verschiebbar ist.

Der große Vorteil besteht darin, dass durch die Verwendung einer Fixierhülse eine vom Schwingungsdämpfer unabhängig produzierbare Baueinheit vorliegt, die dem Montageprozess zuführbar ist. Die Baueinheit kann vor dem Einbau in den Schwingungsdämpfer überprüft und bei einer Abweichung sehr leicht demontiert werden. Des Weiteren liegt funktional eine strikte Trennung zwischen den Kräften der Stützfedern für die Baueinheit und der Federanordnung für die Ventilscheiben vor.

Bei einer ersten Variante ist vorgesehen, dass die Rastverbindung zwischen dem mindestens einen Federteller und der Fixierhülse ausgeführt ist.

Die Fixierhülse trägt den zweiten Kolben außenseitig, so dass der zweite Kolben direkt auf der Kolbenstange gleiten kann.

Zur leichteren Montage ist die Fixierhülse radial elastisch ausgeführt. Die Verwendung von Kunststoff für die Fixierhülse erhöht die Elastizität.

Zusätzlich kann die Fixierhülse Längsschlitze aufweisen, die die radiale Elastizität erhöht.

Gemäß einem vorteilhaften Unteranspruch ist die Fixierhülse mit mindestens einen Dichtring zum Zylinder bestückt, damit keine undefinierte Leckage zwischen den Arbeitsräumen des Schwingungsdämpfers auftritt.

Die Fixierhülse eine Fixiernut weist für den zweiten Kolben auf. Es wird verhindert, dass sich durch eine ungewollte Axialverlagerung des Kolbens die Vorspannung der Federanordnung auf den Kolben verändert,

Der angrenzende Bereich zur Fixiernut ist als eine Montageschräge ausgeführt, die die radiale Aufweitung der Fixierhülse beim Montagevorgang fördert.

Um eine in Axialrichtung kompakte Anordnung der Baueinheit mit der mindestens einen Stützfeder zu erreichen, ist der mindestens eine Federteller topfförmig mit einem abgewinkelten Rand ausgeführt, wobei der Rand und ein Boden des Federtellers als Stützflächen für die Federanordnung und eine Stützfeder dienen.

Zur Vermeidung von Leckagen am Kolben weist der zweite Kolben an seinem Innendurchmesser mindestens einen Dichtring auf.

Bei einer alternativen Ausführungsform ist die Fixierhülse zweiteilig ausgeführt und wird über die Rastverbindung axial zusammengehalten.

Man kann jeweils eine Fixierhülse einteilig mit einem Federteller ausgeführten.

Dabei ist vorgesehen, dass die Fixierhülse den zweiten Kolben an seinem Innendurchmesser trägt.

In weiterer vorteilhafter Ausgestaltung weisen die Fixierhülsen fingerartige Schnapphaken auf, die am zweiten Kolben angreifen. Es besteht die Möglichkeit, dass die Fixierhülsen als identische Bauteile ausgeführt sind, die spiegelbildlich am Kolben angreifen.

### Kurze Beschreibung der Erfindung

Anhand der folgenden Figurenbeschreibung soll die Erfindung näher erläutert werden.

Es zeigt:
- Fig. 1: Kolbenstange mit ersten Kolben und der erfindungsgemäßen Baueinheit mit dem zweiten axial beweglichen Kolben
- Fig. 2: Baueinheit nach Fig. 1 als Einzelteil
- Fig. 3: Alternative Baueinheit zur Fig. 2
- Fig. 4: Baueinheit mit axial geteilter Fixierhülse
- Fig. 5: Explosionszeichnung zur Fig. 4

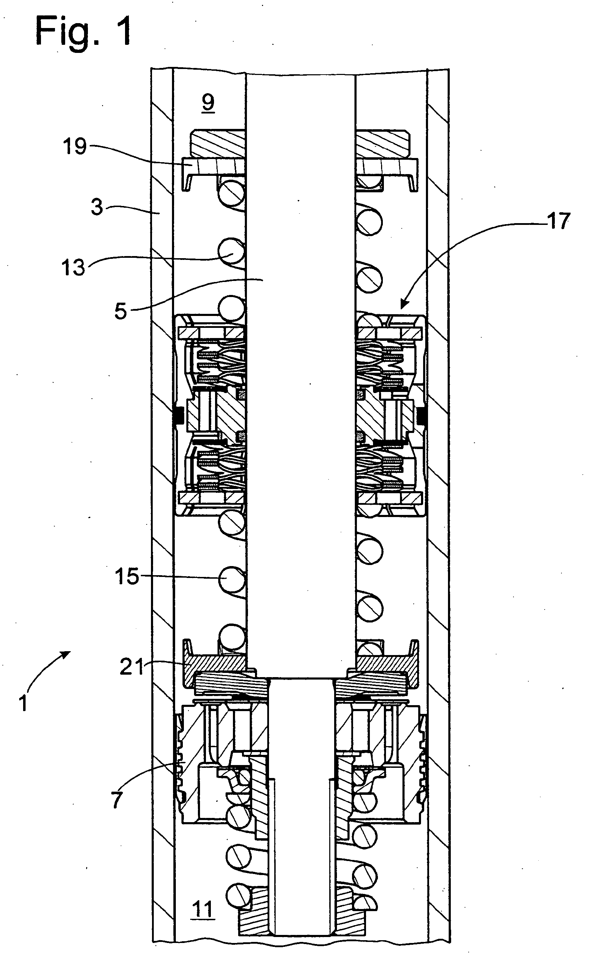

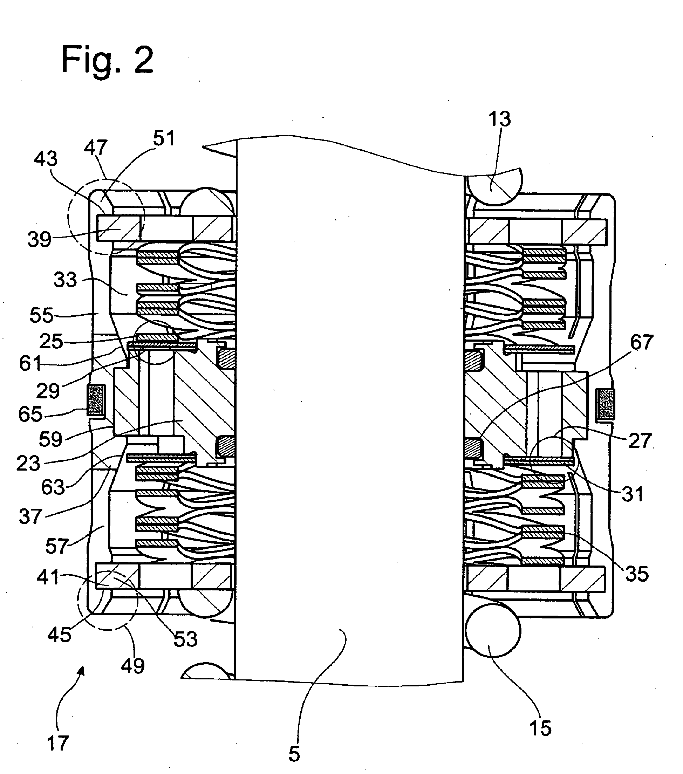

Die Fig. 1 zeigt einen Ausschnitt aus einem Schwingungsdämpfer 1 mit einem dämpfmediumgefüllten Zylinder 3, in dem eine Kolbenstange 5 axial beweglich geführt ist. An der Kolbenstange 5 ist ein erster Kolben 7 axial befestigt. Dieser Kolben 7 unterteilt den Zylinder in einen kolbenstangenseitigen Arbeitsraum 9 und einen kolbenstangenfernen Arbeitsraum 11. Der Aufbau und die Funktion des Kolbens 7 sind allgemein bekannt. Ergänzend wird auf die DE 34 45 684 A1, Fig. 2, verwiesen, deren Offenbarung Bestandteil dieser Figurenbeschreibung sein soll.

Im kolbenstangenseitigen Arbeitsraum 9 sind auf der Kolbenstange 5 zwei Stützfedern 13; 15 angeordnet, deren Stützkräfte entgegengesetzt gerichtet auf eine Baueinheit 17 wirken, die in Fig. 2 als Einzelteil dargestellt ist. Jede Stützfeder 13; 15 liegt endseitig an einer Stützringscheibe 19; 21 an, die ortsfest zur Kolbenstange 5 ausgeführt sind. Bei einer Kolbenstangebewegung kann sich die Baueinheit 17 gegen die Kräfte der Stützfedern 13; 15 axial zum ersten Kolben 7 verschieben.

Die Fig. 2 zeigt die Baueinheit 17, die einen zweiten Kolben 23 aufweist, der direkt auf der Kolbenstange 5 zentriert ist. Der zweite Kolben 23 verfügt über Dämpfventile 25; 27, mit Ventilscheiben 29; 31, die jeweils von Federanordnungen 33; 35 in der Bauform von Wellfedern vorgespannt sind. Die Anzahl und die Form der Federn der Federanordnungen 33; 35 können beliebig von der dargestellten Fig. 2 abweichen.

Der zweite Kolben wird von einer Fixierhülse 37 gehalten, die endseitig jeweils einen Federteller 39; 41 für die Federanordnungen 33; 35 trägt. Die Federteller 39; 41 stellen zur Fixierhülse 37 separate Bauteile dar, so dass zwei axial wirksame Teilungsfugen 43; 45 vorliegen, die jeweils von einer Rastverbindung 47; 49 gehalten werden, so dass die gesamte Baueinheit 17 gegen die Stützfedern 13; 15 axial verschiebbar ist. Die Fixierhülse verfügt über Randsegmente 51; 53, die auf den außenseitigen Deckflächen der Federteller 39; 41 anliegen.

Die Fixierhülse ist radial elastisch ausgeführt, einerseits begünstigt durch die Verwendung eines Kunststoffmaterials und andererseits durch Längsschlitze 55; 57. Der zweite Kolben 23 wird von der Fixierhülse 37 außenseitig getragen, wofür die Fixierhülse eine Fixiernut 59 aufweist. Zur leichteren Montage ist der angrenzende Bereich zur Fixiernut mit Montageschrägen 61; 63 ausführt, so dass der Kolben von einer beliebigen Seite in die Fixiernut einschiebbar ist.

Zur Vermeidung von Leckagen zum Zylinder dienen ein Dichtring 65 in der. Fixierhülse 37 und mindestens ein Dichtring 67 am Innendurchmesser des zweiten Kolbens.

Bei der Montage wird der mit den Dichtringen 67 bestückte zweite Kolben 23 in die endseitig offene Fixierhülse 37 bis in die Fixiernut 59 geschoben, wobei sich die Fixierhülse unter der Wirkung der Montageschräge 61 oder 63 radial aufweitet. Danach werden jeweils endseitig die Ventilscheiben 29; 31 und die Federanordnungen 33; 35 in die Fixierhülse eingesetzt. Die Federteller 39, 41 verschließen die Baueinheit 17.

Die Wirkungsweise des Schwingungsdämpfers gleicht im Wesentlichen dem Prinzip gemäß der DE 100 41 199 C1, so dass auf eine Wiederholung der Beschreibung verzichtet werden kann. Abweichend sorgt die Trennung der Stützfedern 13; 15 und der Federanordnungen 33; 35 für eine bedarfsgerechtere Dämpfkraftkennhnie.

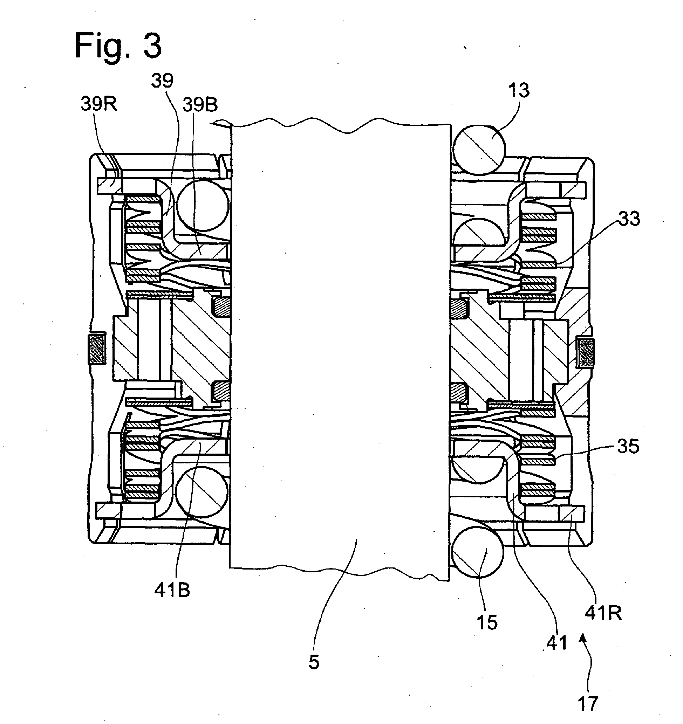

Die Ausführung der Baueinheit 17 gemäß der Fig. 3 entspricht im prinzipiellen Aufbau der Fig. 2. Abweichend kommen Federteller 39; 41 zur Anwendung, die topfförmig mit einem abgewinkelten Rand 39R; 41 R und einem Boden 39B; 41 B ausgeführt sind, wobei die Ränder und die Böden als Stützflächen für die Federanordnungen 33; 35 und die Stützfedern 13; 15 dienen. Dadurch lässt sich in Grenzen eine axiale Überdeckung der Federanordnungen 39; 41 mit den Stützfedern 13; 15 erreichen, so dass insgesamt ein längerer axialer Bauraum für die Stützfedern 13; 15 zur Verfügung steht.

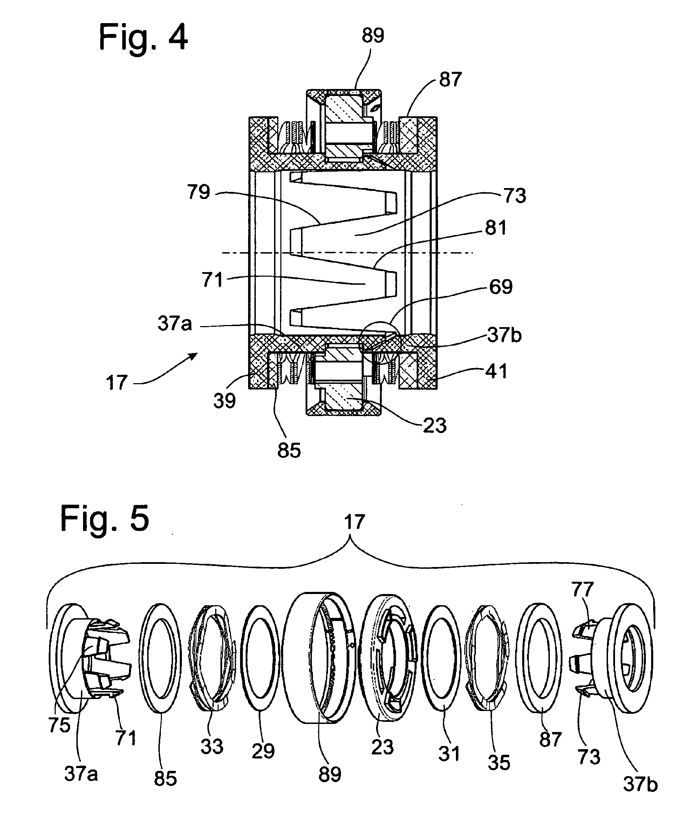

Die Fig. 4 und die dazugehörige Explosionszeichnung nach Fig. 5 zeigen eine Baueinheit 17, deren Fixierhülse 37 axial geteilt ausgeführt ist und zwei Fixierhülsenteile 37a: 37b aufweist, die jeweils über eine Rastverbindung 69 mit dem zweiten Kolben 23 zusammengehalten werden. Jede der Fixierhülsenteile 37a; 37b ist einteilig mit einem Federteller 39; 41 ausgeführt. Ein wesentlicher Unterschied zu den Varianten nach den Fig. 2 und 3 besteht darin, dass die Fixierhülse den zweiten Kolben 23 an seinem Innendurchmesser trägt. Die Fixierhülsen 37a; 37b weisen fingerartige Schnapphaken 71; 73 auf, die jeweils dieselbe Teilung aufweisen, so dass die Schnapphaken 71 in die Lücken zwischen den Schnapphaken 73 eingreifen können. Auf der Außenseite der Schnapphaken sind abschnittsweise Fixiernutensegmente 75; 77 ausgeführt, so dass die Fixierhülsenteile 37a; 37b unabhängig voneinander am zweiten Kolben 23 befestigt sind. Wie man in der Fig. 4 erkennt, verlaufen die Seitenflächen 79; 81 der fingerartigen Schnapphaken 71; 73, gepfeilt, so dass durch die Wahl des Winkels zur Längsachse eine Selbsthemmung erreicht werden kann. Diese Selbsthemmung wird durch die permanente Vorspannung der Stützfedern 13; 15 sichergestellt. Die Teilungsfuge zwischen den beiden Fixierhülsen 37a; 37b verläuft an den Seitenflächen 79; 81 der Schnapphaken.

Zusätzlich zu den Figuren 2 und 3 soll verdeutlicht werden, dass die Federanordnungen 31; 33 auch Elastomerfedern 85; 87 aufweisen können, die für eine progressive Federkraftkennlinie sorgen. Zur Abdichtung der Baueinheit 17 zum Zylinder dient ein konventioneller Kolbenring 89.

## Patentansprüche

1. Schwingungsdämpfer, umfassend einen Zylinder, in dem eine Kolbenstange axial beweglich geführt ist, wobei an der Kolbenstange ein erster Kolben ortsfest und ein zweiter, mit mindestens einer von einer Federanordnung vorgespannten Ventilscheibe bestückter Kolben gegen eine Federkraft von mindestens einer Stützfeder axial verschiebbar gelagert ist, wobei die Federanordnung mindestes einen Federteller aufweist, an dem sich die mindestens eine Stützfeder abstützt,
**dadurch gekennzeichnet,**
**dass** der zweite Kolben (23) von einer Fixierhülse (37; 37a; 37b) gehalten wird, die den mindestens einen Federteller (39; 41) trägt, wobei die Baueinheit aus Fixierhülse (37; 37a; 37b) und dem mindestens einen Federteller (39; 41) eine axial wirksame Teilungsfuge (45; 45) für eine Rastverbindung (47; 49; 69) innerhalb der Baueinheit (17) aufweist, wobei die gesamte Baueinheit gegen die mindestens eine Stützfeder (13; 15) axial verschiebbar ist.

2. Schwingungsdämpfer nach Anspruch 1,
**dadurch gekennzeichnet,**
**dass** die Rastverbindung (47; 49) zwischen dem mindestens einen Federteller (39; 41) und der Fixierhülse (37) ausgeführt ist.

3. Schwingungsdämpfer nach Anspruch 1,
**dadurch gekennzeichnet,**
**dass** die Fixierhülse (37) den Kolben (23) außenseitig trägt.

4. Schwingungsdämpfer nach Anspruch 1,
**dadurch gekennzeichnet,**
**dass** die Fixierhülse (37) radial elastisch ausgeführt ist.

5. Schwingungsdämpfer nach Anspruch 4,
**dadurch gekennzeichnet,**
**dass** die Fixierhülse (37) Längsschlitze (55; 57) aufweist.

6. Schwingungsdämpfer nach Anspruch 1,
**dadurch gekennzeichnet,**
**dass** die Fixierhülse (37; 37a; 7b) mit mindestens einen Dichtring (65) zum Zylinder (3) bestückt ist.

7. Schwingungsdämpfer nach Anspruch 1,
**dadurch gekennzeichnet,**
**dass** die Fixierhülse (37; 37a; 37b) eine Fixiernut (59; 75; 77) für den zweiten Kolben (23) aufweist.

8. Schwingungsdämpfer nach Anspruch 7,
**dadurch gekennzeichnet,**
**dass** der angrenzende Bereich zur Fixiernut (59) als eine Montageschräge (61; 63) ausgeführt ist.

9. Schwingungsdämpfer nach Anspruch 1,
**dadurch gekennzeichnet,**
**dass** der mindestens eine Federteller (31; 33) topfförmig mit einem abgewinkelten Rand (39R; 41 R) ausgeführt ist, wobei der Rand (39R; 41 R) und ein Boden (39B; 41 B) des Federtellers (31; 33) als Stützflächen für die Federanordnung (33; 35) und eine Stützfeder (13; 15) dienen.

10. Schwingungsdämpfer nach Anspruch 1,
**dadurch gekennzeichnet,**
**dass** der zweite Kolben (23) an seinem Innendurchmesser mindestens einen Dichtring (67) aufweist.

11. Schwingungsdämpfer nach Anspruch 1,
**dadurch gekennzeichnet,**
**dass** die Fixierhülse (37a; 37b) zweiteilig ausgeführt und über die Rastverbindung (69) axial zusammengehalten wird.

12. Schwingungsdämpfer nach Anspruch 11,
**dadurch gekennzeichnet,**
**dass** jeweils eine Fixierhülse (37a; 37b) einteilig mit einem Federteller (39; 41) ausgeführt ist.

13. Schwingungsdämpfer nach Anspruch 1,
**dadurch gekennzeichnet,**
**dass** die Fixierhülse (37a; 37b) den zweiten Kolben (23) an seinem Innendurchmesser trägt.

14. Schwingungsdämpfer nach Anspruch 11,
**dadurch gekennzeichnet,**
**dass** die Fixierhülsen (37a; 37b) fingerartige Schnapphaken (71; 73) aufweisen, die am zweiten Kolben (23) angreifen.

## Claims

1. Vibration damper, comprising a cylinder in which a piston rod is guided axially movably, a first piston being mounted fixedly on the piston rod, and a second piston equipped with at least one valve disc prestressed by a spring arrangement being mounted axially displaceably on the piston rod counter to a spring force of at least one supporting spring, the spring arrangement having at least one spring plate on which the at least one supporting spring is supported, **characterized in that** the second piston (23) is held by a fixing sleeve (37; 37a; 37b) which carries the at least one spring plate (39; 41), the structural unit which consists of the fixing sleeve (37; 37a; 37b) and of the at least one spring plate (39; 41) having an axially effective joint (45; 45) for a latching connection (47; 49; 69) within the structural unit (17), the entire structural unit being axially displaceable counter to the at least one supporting spring (13; 15).

2. Vibration damper according to Claim 1, **characterized in that** the latching connection (47; 49) is formed between the at least one spring plate (39; 41) and the fixing sleeve (37).

3. Vibration damper according to Claim 1, **characterized in that** the fixing sleeve (37) carries the piston (23) on the outside.

4. Vibration damper according to Claim 1, **characterized in that** the fixing sleeve (37) is designed to be radially elastic.

5. Vibration damper according to Claim 4, **characterized in that** the fixing sleeve (37) has longitudinal slots (55; 57).

6. Vibration damper according to Claim 1, **characterized in that** the fixing sleeve (37; 37a; 37b) is equipped with at least one sealing ring (65) with respect to the cylinder (3).

7. Vibration damper according to Claim 1, **characterized in that** the fixing sleeve (37; 37a; 37b) has a fixing groove (59; 75; 77) for the second piston (23).

8. Vibration damper according to Claim 7, **characterized in that** the region contiguous to the fixing groove (59) is designed as a mounting slope (61; 63).

9. Vibration damper according to Claim 1, **characterized in that** the at least one spring plate (31; 33) is designed to be pot-shaped with an angled margin (39R; 41R), the margin (39R; 41R) and a bottom (39B; 41B) of the spring plate (31; 33) serving as supporting faces for the spring arrangement (33; 35) and a supporting spring (13; 15).

10. Vibration damper according to Claim 1, **characterized in that** the second piston (23) has at least one sealing ring (67) on its inside diameter.

11. Vibration damper according to Claim 1, **characterized in that** the fixing sleeve (37a; 37b) is of two-part design and is held together axially via the latching connection (69).

12. Vibration damper according to Claim 11, **characterized in that** in each case a fixing sleeve (37a; 37b) is formed in one part with a spring plate (39; 41).

13. Vibration damper according to Claim 1, **characterized in that** the fixing sleeve (37a; 37b) carries the second piston (23) on its inside diameter.

14. Vibration damper according to Claim 11, **characterized in that** the fixing sleeves (37a; 37b) have finger-like snap hooks (71; 73) which engage on the second piston (23).

## Revendications

1. Amortisseur de vibrations, comprenant un cylindre, dans lequel est guidée une tige de piston déplaçable axialement, un premier piston étant monté fixement sur la tige de piston et un deuxième piston muni d'au moins un disque de soupape précontraint par un agencement de ressort étant monté de manière déplaçable à l'encontre de la force de ressort d'au moins un ressort de support, l'agencement de ressort présentant au moins une cuvette de ressort sur laquelle s'appuie l'au moins un ressort de support,
**caractérisé en ce que**
le deuxième piston (23) est maintenu par une douille de fixation (37 ; 37a ; 37b), qui porte l'au moins une cuvette de ressort (39 ; 41), l'unité constructive constituée de la douille de fixation (37 ; 37a ; 37b) et de l'au moins une cuvette de ressort (39 ; 41) présentant un joint de séparation agissant axialement (45 ; 45) pour une connexion par encliquetage (47 ; 49 ; 69) à l'intérieur de l'unité constructive (17), l'ensemble de l'unité constructive étant de préférence déplaçable axialement à l'encontre de l'au moins un ressort de support (13 ; 15).

2. Amortisseur de vibrations selon la revendication 1,
**caractérisé en ce que**
la connexion par encliquetage (47 ; 49) est réalisée entre l'au moins une cuvette de ressort (39 ; 41) et la douille de fixation (37).

3. Amortisseur de vibrations selon la revendication 1,
**caractérisé en ce que**
la douille de fixation (37) porte le piston (23) du côté extérieur.

4. Amortisseur de vibrations selon la revendication 1,
**caractérisé en ce que**
la douille de fixation (37) est réalisée de manière élastique radialement.

5. Amortisseur de vibrations selon la revendication 4,
**caractérisé en ce que**
la douille de fixation (37) présente des fentes longitudinales (55 ; 57).

6. Amortisseur de vibrations selon la revendication 1,
**caractérisé en ce que**
la douille de fixation (37 ; 37a ; 7b) est munie d'au moins une bague d'étanchéité (65) pour le cylindre (3).

7. Amortisseur de vibrations selon la revendication 1,
**caractérisé en ce que**
la douille de fixation (37 ; 37a ; 37b) présente une rainure de fixation (59 ; 75 ; 77) pour le deuxième piston (23).

8. Amortisseur de vibrations selon la revendication 7.
**caractérisé en ce que**
la région adjacente à la rainure de fixation (59) est réalisée sous forme de biseau de montage (61 ; 63).

9. Amortisseur de vibrations selon la revendication 1,
**caractérisé en ce que**
l'au moins une cuvette de ressort (31 ; 33) est réalisée en forme de pot avec un bord coudé (39R ; 41R), le bord (39R, 41R) et un fond (39B ; 41B) de la cuvette de ressort (31 ; 33) servant de surfaces de support pour l'agencement de ressort (33 ; 35) et un ressort de support (13 ; 15).

10. Amortisseur de vibrations selon la revendication 1,
**caractérisé en ce que**
le deuxième piston (23) présente au niveau de son diamètre intérieur au moins une bague d'étanchéité (67) .

11. Amortisseur de vibrations selon la revendication 1,
**caractérisé en ce que**
la douille de fixation (37a ; 37b) est réalisée en deux parties et est maintenue axialement par le biais de la connexion par encliquetage (69).

12. Amortisseur de vibrations selon la revendication 11,
**caractérisé en ce que**
dans chaque cas une douille de fixation (37a ; 37b) est réalisée d'une seule pièce avec une cuvette de ressort (39 ; 41).

13. Amortisseur de vibrations selon la revendication 1,
**caractérisé en ce que**
la douille de fixation (37a ; 37b) porte le deuxième piston (23) sur son diamètre intérieur.

14. Amortisseur de vibrations selon la revendication 11,
**caractérisé en ce que**
les douilles de fixation (37a ; 37b) présentent des crochets d'encliquetage en forme de doigts (71 ; 73) qui viennent en prise sur le deuxième piston (23).
